# EUROPÄISCHE PATENTSCHRIFT

(11) **EP 0 875 697 B1**
(45) Veröffentlichungstag und Bekanntmachung des Hinweises auf die Patenterteilung: **12.06.2002**
(21) Anmeldenummer: 97122164.3
(22) Anmeldetag: 16.12.1997
(51) Int. Cl.: F16H 55/17

(54) **Zahnrad**
Gear wheel
Roue dentée

(30) Priorität: 30.04.1997 DE 19718213
(43) Veröffentlichungstag der Anmeldung: 04.11.1998
(73) Patentinhaber: ROBERT BOSCH GMBH, 70442 Stuttgart (DE)
(72) Erfinder: Hausecker, Walter, 77830 Buehlertal (DE); Moskob, Frank, 77815 Buehl (DE); Kurzmann, Rainer, 77855 Achern (DE); Bock, Olaf, 77815 Buehl (DE)

(56) Entgegenhaltungen:
- DE-A- 2 934 874
- DE-C- 470 406
- H. SCHMIDT: "Schneckengetriebe mit Schneckenrädern aus Hostaform" ANTRIEBSTECHNIK, Bd. 24, Nr. 3, 1985, Seiten 61-67, XP002108858 Mainz

## Beschreibung

### Stand der Technik

Die Erfindung geht aus von einem Zahnrad nach der Gattung des jeweiligen Hauptanspruchs, wie es aus der DE-C-470 406 bekannt ist.

Zahnräder mit einem Zahnkranz, der die Verzahnung des Zahnrades trägt, sind z.B. aus der DE-A 29 34 874 bekannt. Bei derartigen, in der Regel scheibenförmigen und eine Nabe aufweisenden Zahnrädern kann sich der Zahnkranz unter Antriebsoder Abtriebslast am Angriffspunkt der Last verformen, was zu unerwünschten Betriebsgeräuschen und einer Verringerung der Zahnrad-Standzeit führt. Dieser Effekt tritt verstärkt auf, wenn wie häufig üblich, um Material und Gewicht zu sparen sowie um das Trägheitsmoment des Zahnrades klein zu halten zwischen dem Zahnkranz und der Zahnradnabe eine Aussparung vorgesehen ist, so daß der zylinderförmige Zahnkranz mit der Zahnradnabe lediglich durch eine Wand verhältnismäßig geringer Stärke verbunden ist. Bei derartigen Ausführungsformen wird zur Stabilisierung der Zahnkranz häufig über Radialstege an der Nabe abgestützt. Wird aber das Zahnrad einstückig im Spritzgußverfahren hergestellt, können beim Abkühlen des Gußmaterials an den Anbindungsstellen der Radialstege am Zahnkranz charakteristische Deformierungen auftreten, wodurch der Zahnkranz des Zahnrads von der Kreisform abweicht. Auch hierdurch wird das Laufgeräusch sowie die Standzeit des Zahnradtriebes verschlechtert.

### Vorteile der Erfindung

Das erfindungsgemäße Zahnrad mit den Merkmalen des jeweiligen Hauptanspruchs 1,4,5 bzw. 8 hat den Vorteil größerer Stabilität gegen radiale Belastungen, wie sie beispielsweise an den Umfangsstellen auftreten können, an denen das Zahnrad mit einem anderen Getriebeglied in Eingriff steht. Unter einer Antriebs- oder Abtriebslast weicht der Zahnkranz auf Grund einer optimalen Kraftverteilung im Zahnkranz kaum zurück, und die Lebensdauer des Zahnrades wird beträchtlich erhöht. Der Zahnkranz kann eine Innen- oder Außenverzahnung aufweisen; in beiden Fällen ist die Stabilität des Zahnkranzes verbessert.

Durch die in den Unteransprüchen aufgeführten Maßnahmen sind vorteilhafte Weiterbildungen des Zahnrads nach dem Hauptanspruch möglich. Gemäß einer günstigen Ausgestaltung der Erfindung sind die wenigstens zwei Wände des Zahnkranzes konzentrisch zur Drehachse des Zahnrades angeordnet und so die Laufruhe des Zahnrades weiter verbessert.

Radiale Kräfte können über einen großen Bereich des Umfangs des Zahnrades aufgenommen werden, wenn sich der wenigstens eine Steg in der Drehebene des Zahnrades erstreckt.

Ist der sich in der Drehebene des Zahnrades erstreckende Steg mittig zur axialen Ausdehnung der Wände angeordnet, hat der Zahnkranz im Querschnitt ein Doppel-T-Profil. Der Zahnkranz erhält so eine besonders hohe Biege- und Torsionssteifigkeit.

Eine vorteilhafte Weiterbildung der Erfindung sieht vor, daß die Wände durch drehachsenparallele Stege im Sinne von Querstegen verbunden sind . In weiterer Ausgestaltung ist darüber hinaus ein Steg in der Drehebene so angeordnet, daß die Querstege beiderseitig an diesen anstoßen. Durch die Querstege wird auch eine axiale Verkippung der Wände gegeneinander verhindert. Dieser Fall kann beispielsweise eintreten, wenn radiale Kräfte auch an axial äußeren Punkten im Randbereich der Wände angreifen.

Die Querstege schließen mit dem Radius einen Winkel ein. Bei dieser Anordnung werden sowohl radiale als auch in Umfangsrichtung wirkende Kraftkomponenten aufgenommen.

Wenn der eingeschlossene Winkel der Querstege mit dem Radius abwechselnd positiv und negativ ist, ergibt sich eine wabenähnliche Struktur, bei der Kräfte gleichmäßig über den Zahnkranz verteilt werden.

Zahnkranz und Zahnradnabe weisen nach der Erfindung eine an beiden Bauteilen angeformte Rückwand auf. Diese Bauform benötigt einen geringen Materialaufwand und ist einfach herzustellen. Darüber hinaus können weitere Getriebeglieder oder andere Bauteile im Inneren des zwischen Zahnkranz und Zahnradnabe entstehenden Hohlraums platzsparend angeordnet sein.

Gemäß Anspruch 5 bzw. 8 erfolgt die Abstützung des Zahnkranzes an der Zahnradnabe über an der Rückwand angeformte Radialstege. Gerade bei dieser Bauform macht sich die doppel- oder mehrwandige Ausführung des Zahnkranzes vorteilhaft bemerkbar. Wie Experimente gezeigt haben, erhöht sich die Lebensdauer des Zahnrades im Vergleich zu der vorbekannten einwandigen Ausführung erheblich. Dies gilt besonders bei Anwendungen mit erhöhter Umgebungstemperatur.

Gemäß Anspruch 8 sind Dämpfungselemente in den durch die Radialstege, die Rückwand, den Zahnkranz und die Zahnradnabe gebildeten Zwischenräumen angeordnet. Die Dämpfungselemente weisen Ausnehmungen auf, in die Mitnehmer in Form von Zapfen zur Drehmomentübertragung greifen. Durch die angeformten Radialstege sind die Dämpfungselemente in Umfangsrichtung gegen Verdrehen fixiert. Die Dämpfungselemente, die beispielsweise aus einem elastischen Material wie Gummi bestehen können, dämpfen den bei Beschleunigung oder Abbremsung des Zahnrades zwischen dem Mitnehmer und dem Dämpfungselement auftretenden Stoß oder Schub.

Das Zahnrad ist vorzugsweise aus einem Kunststoff gefertigt, insbesondere gespritzt. Die beim Spritzprozeß insbesondere bei der Ausführungsform mit Radialstegen zwischen Zahnradnabe und Zahnkranz auftretenden Verformungen beim Abkühlen der Spritzmasse werden durch die doppel- oder mehrwandige Ausführungsform stark verringert. Ferner werden die im Spritzprozeß auftretenden Kräfte in Stegen und Anbindungsstellen der Stege an den Zahnkranz besser verteilt und kompensiert. Da die Querstege zwischen den beiden Wänden verlaufen, können sie relativ kurz gehalten werden. Bei als Spritzgießteile hergestellten Zahnräder wird auf diese Weise die Längsschrumpfung der Stege kleingehalten und eine Verformung am Zahnkranz vermieden.

### Zeichnung

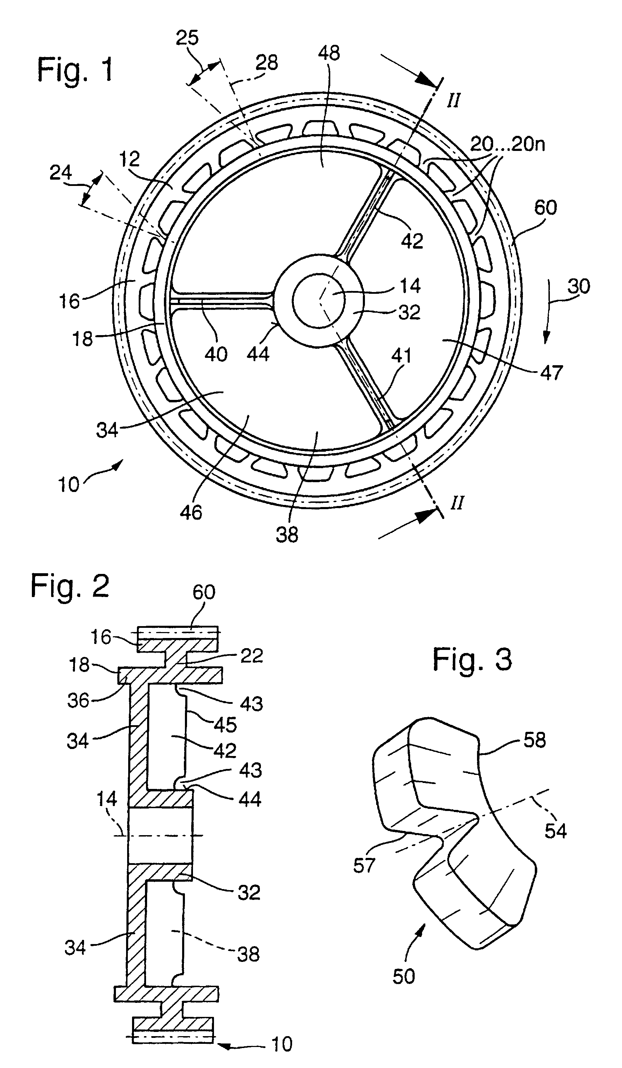

Ein Ausführungsbeispiel der Erfindung ist in der Zeichnung dargestellt und in der nachfolgenden Beschreibung näher erläutert. Es zeigen Figur 1 eine Prinzipdarstellung eines Schneckenrades als Zahnrad, Figur 2 einen Schnitt durch das Schneckenrad in Figur 1 entlang der Linie II-II und Figur 3 ein Dämpfelement zur Drehmomentübertragung in Schrägansicht.

### Beschreibung des Ausführungsbeispiels

In den Figuren 1 und 2 ist ein Zahnrad 10 mit einem Zahnkranz 12, einer Nabe 32 und einer die Nabe 32 und den Zahnkranz verbindenden Rückwand 34 dargestellt, das um eine Drehachse 14 (senkrecht zur Zeichenebene der Figur 1) drehbar ist. Der Zahnkranz 12 besteht aus zwei Wänden 16, 18, die sich quer zur die Drehebene des Zahnrades 10 bildenden Zeichenebene der Figur 1 erstrecken und die durch mehrere Stege 20 ... 20n verbunden sind.

Die Wände 16 und 18 verlaufen mit Abstand benachbart zueinander und sind konzentrisch zur Drehachse 14 des Zahnrades angeordnet. Der Abstand der Wände 16 und 18 ist somit entlang des gesamten Umfangs des Zahnrades gleich, d.h. die Wände verlaufen parallel zueinander. Wie die Figur 2 zeigt, verbindet ein zweiter Steg 22 die Wände 16 und 18, der sich in der Drehebene des Zahnrades 10 entlang seines gesamten Umfangs erstreckt. Der zweite Steg 22 ist mittig zur axialen Ausdehnung der Wände 16, 18 angeordnet, so daß der Zahnkranz 12 im Querschnitt ein Doppel-T-Profil aufweist. Die Stege 20 ... 20n sind in axialer Richtung parallel zur Drehachse 14 des Zahnrades 10 angeordnet und stoßen als Querstege beiderseitig an den zweiten Steg 22 an. Denkbar ist auch, daß die Stege 20 ... 20n in axialer Richtung unter einem Winkel zur Drehachse 14 angeordnet sind. In radialer Richtung, d.h. senkrecht zur Drehachse 14 des Zahnrades 10, schließen die Querstege 20 ... 20n Winkel 24, 25 mit dem Radius 28 des Zahnrades 10 ein. In Umfangsrichtung 30 wechseln sich positive Winkel 24 mit negativen Winkeln 25 ab. Dadurch ergibt sich eine (halb-)wabenähnliche Verbindungsstruktur der beiden Wände 16 und 18.

Die Rückwand 34 des Zahnrades 10 stößt an die innere Wand 18 des Zahnkranzes 12 und schließt nahezu bündig mit dem äußeren axialen Ende 36 der Innenwand 18 ab. Zwischen Zahnkranz 12, Zahnradnabe 32 und Rückwand 34 ergibt sich somit eine Ausnehmung 38 im Inneren des Zahnrades 10. In der Ausnehmung 38 sind Radialstege 40, 41 und 42 an der Rückwand 34 angeformt, die den Zahnkranz 12 an der Zahnradnabe 32 abstützen, und die zueinander jeweils Winkel von 120° einschließen. Im oberen, von der Rückwand 34 abgewandten Teil 45 jedes Radialstegs 40, 41, 42 sind zur Wand 18 und der Außenwand 44 der Zahnradnabe 32 hin Aussparungen 43 eingebracht. In die Zahnradnabe 32 kann beispielsweise ein Lager zur Lagerung des Zahnrades 10 auf einer Welle eingepreßt sein

In den jeweils zwischen den Stegen 40, 41 und 42, der Wand 18 und der Zahnradnabe 32 gebildeten drittelkreisförmigen Ausnehmungen 46, 47, 48 sind jeweils identische elastische Dämpfungselemente 50 eingesetzt. Ein Dämpfungselement 50 ist in Figur 3 näher dargestellt. Es besteht aus Gummi oder einem anderen elastischen Material und hat ebenfalls im wesentlichen einen drittelkreisförmigen Querschnitt. Mittig zu einer seiner Spiegelachsen 54 weist es einen Einschnitt 57 in Form eines sich zu dem Innenumfang 58 des Dämpfungselements 50 hin verjüngenden, gleichschenkligen Dreiecks auf. Der Einschnitt 57 dient einerseits der besseren Verformbarkeit des Dämpfelements 50 in Umfangsrichtung des Zahnrades 10, so daß es sich mit kleiner Vorspannung jeweils zwischen zwei Stegen 40, 41 oder 42 einklemmen läßt und im Zahnrad 10 gehalten wird, und andererseits der Aufnahme von Mitnehmern, beispielsweise in Form eines in den Einschnitt 57 greifenden Zapfens, zur Drehmomentübertragung vom Zahnrad 10 auf ein anderes Getriebeelement.

An der äußeren Wand 16 des Zahnkranzes 12 ist nach außen eine Stirnverzahnung 60 angeformt. Das gesamte Zahnrad 10 ist einstückig aus einem Kunststoffmaterial gespritzt. Es findet Anwendung in einer nicht näher dargestellten Motor-Getriebe-Antriebseinheit, wo es als Schneckenrad mit einer Schneckenwelle in Eingriff steht.

## Patentansprüche

1. Zahnrad mit einem Zahnkranz (12) und mit einer Zahnradnabe (32), wobei der Zahnkranz (12) aus wenigstens zwei, sich quer zur Drehebene des Zahnrades erstreckenden Wänden (16, 18) gebildet ist, die durch sich in axialer Richtung erstreckende Stege (20) verbunden sind, **dadurch gekennzeichnet, daß**
- der Zahnkranz (12) mit der Zahnradnabe (32) durch eine an Zahnkranz (12) und Zahnradnabe (32) angeformte und sich über den Umfang erstreckende Rückwand (34) verbunden ist, und
- jeder Steg (20) mit dem Radius (28) des Zahnrades einen Winkel (24, 25) einschließt.

2. Zahnrad nach Anspruch 1, **dadurch gekennzeichnet, daß** die Winkel (24, 25) in Umfangsrichtung (30) abwechselnd positiv und negativ sind.

3. Zahnrad nach Anspruch 1 oder 2, **dadurch gekennzeichnet, daß** die Stege (20) derart angeordnet sind, daß sie eine waben- oder halbwabenähnliche Verbindungsstruktur zwischen den Wänden des Zahnrades bilden.

4. Zahnrad mit einem Zahnkranz (12) und mit einer Zahnradnabe (32), wobei der Zahnkranz (12) aus wenigstens zwei, sich quer zur Drehebene des Zahnrades (10) erstreckenden Wänden (16, 18) gebildet ist, die durch sich in axialer Richtung erstreckende Stege (20) verbunden sind, **dadurch gekennzeichnet, daß**
- der Zahnkranz (12) mit der Zahnradnabe (32) durch eine an Zahnkranz (12) und Zahnradnabe (32) angeformte und sich über den Umfang erstreckende Rückwand (34) verbunden ist, und
- mehrere Stege unter einem Winkel zur Drehachse (14) des Zahnrades angeordnet sind.

5. Zahnrad mit einem Zahnkranz (12) und mit einer Zahnradnabe (32), wobei der Zahnkranz (12) aus wenigstens zwei, sich quer zur Drehebene des Zahnrades (10) erstreckenden Wänden (16, 18) gebildet ist, die durch sich in axialer Richtung erstreckende Stege (20) verbunden sind, **dadurch gekennzeichnet, daß**
- der Zahnkranz (12) mit der Zahnradnabe (32) durch eine an Zahnkranz (12) und Zahnradnabe (32) angeformte und sich über den Umfang erstreckende Rückwand (34) verbunden ist,
- an der Rückwand (34) Radialstege (40, 41, 42) angeformt sind, und
- das Zahnrad aus einem Kunststoff gefertigt ist, vorzugsweise gespritzt ist.

6. Zahnrad nach Anspruch 5, **dadurch gekennzeichnet, daß** jeder Radialsteg zur Wand des Zahnkranzes und zur Außenwand der Zahnradnabe hin eine Aussparung (43) aufweist.

7. Zahnrad each Anspruch 5 oder 6, **dadurch gekennzeichnet, daß**
- Dämpfungselemente (50) in den durch die Radialstege (40, 41, 42), die Rückwand (34), den Zahnkranz (12) und die Zahnradnabe (32) gebildeten Zwischenräumen (46, 47, 48) angeordnet sind, und
- Ausnehmungen (57) an den Dämpfungselementen ausgeformt sind, die zum Eingreifen von Mitnehmern zur Drehmomentübertragung dienen.

8. Zahnrad mit einem Zahnkranz (12) und mit einer Zahnradnabe (32), wobei der Zahnkranz (12) aus wenigstens zwei, sich quer zur Drehebene des Zahnrades (10) erstreckenden Wänden (16, 18) gebildet ist, die durch sich in axialer Richtung erstreckende Stege (20) verbunden sind, **dadurch gekennzeichnet, daß**
- der Zahnkranz (12) mit der Zahnradnabe (32) durch eine an Zahnkranz (12) und Zahnradnabe (32) angeformte und sich über den Umfang erstreckende Rückwand (34) verbunden ist,
- an der Rückwand (34) Radialstege (40, 41, 42) angeformt sind,
- Dämpfungselemente (50) in den durch die Radialstege (40, 41, 42), die Rückwand (34), den Zahnkranz (12) und die Zahnradnabe (32) gebildeten Zwischenräumen (46, 47, 48) angeordnet sind, und
- Ausnehmungen (57) an den Dämpfungselementen ausgeformt sind, die zum Eingreifen von Mitnehmern zur Drehmomentübertragung dienen.

9. Zahnrad nach einem der Ansprüche 1 bis 4 oder 8, **dadurch gekennzeichnet, daß** das Zahnrad (10) aus einem Kunststoff gefertigt ist, vorzugsweise gespritzt ist.

10. Zahnrad nach einem der vorhergehenden Ansprüche, **dadurch gekennzeichnet, daß** die Wände (16, 18) parallel zueinander verlaufen.

11. Zahnrad nach einem der vorhergehenden Ansprüche, **dadurch gekennzeichnet, daß** die Wände (16, 18) durch drehachsenparallele Stege im Sinne von Querstegen (20..20n) und durch einen zweiten Steg (22) in der Drehebene verbunden sind, und daß die Querstege beiderseitig an den zweiten Steg (22) anstoßen.

12. Zahnrad nach einem der vorhergehenden Ansprüche, **gekennzeichnet durch** die Verwendung als Schneckenrad in einem Schneckengetriebe.

## Claims

1. Gear having a gear rim (12) and a gear hub (32), the gear rim (12) being formed from at least two walls (16, 18) extending transversely to the plane of rotation of the gear and connected by webs (20) extending axially, **characterized in that**
- the gear rim (12) is connected to the gear hub (32) by a rear wall (34) formed on gear rim (12) and gear hub (32) and extending around the circumference, and
- each web (20) encloses an angle (24, 25) with the radius (28) of the gear rim.

2. Gear according to Claim 1, **characterized in that** the angles (24, 25) in the circumferential direction (30) are alternately positive and negative.

3. Gear according to Claim 1 or 2, **characterized in that** the webs (20) are arranged in such a way that they form a honeycomb or semi-honeycomb-like connecting structure between the walls of the gear.

4. Gear having a gear rim (12) and a gear hub (32), the gear rim (12) being formed from at least two walls (16, 18) extending transversely to the plane of rotation of the gear (10) and connected by webs (20) extending axially, **characterized in that**
- the gear rim (12) is connected to the gear hub (32) by a rear wall (34) /formed on gear rim (12) and gear hub (32) and extending around the circumference, and
- a plurality of webs are arranged at an angle to the axis of rotation (14) of the gear.

5. Gear having a gear rim (12) and a gear hub (32), the gear rim (12) being formed from at least two walls (16, 18) extending transversely to the plane of rotation of the gear (10) and connected by webs (20) extending axially, **characterized in that**
- the gear rim (12) is connected to the gear hub (32) by a rear wall (34) formed on gear rim (12) and gear hub (32) and extending around the circumference,
- radial webs (40, 41, 42) are formed on the rear wall (34), and
- the gear is made of a plastic, preferably by injection.

6. Gear according to Claim 5, **characterized in that** each radial web has a recess (43) facing the wall of the gear rim and the outer wall of the gear hub.

7. Gear according to Claim 5 or 6, **characterized in that**
- damping elements (50) are arranged in the interstices (46, 47, 48) formed by the radial webs (40, 41, 42), the rear wall (34), the gear rim (12) and the gear hub (32), and
- recesses (57) are shaped out of the damping elements, which serve for the engagement of drivers for the transmission of torque.

8. Gear having a gear rim (12) and a gear hub (32), the gear rim (12) being formed from at least two walls (16, 18) extending transversely to the plane of rotation of the gear (10) and connected by webs (20) extending axially, **characterized in that**
- the gear rim (12) is connected to the gear hub (32) by a rear wall (34) formed on gear rim (12) and gear hub (32) and extending around the circumference,
- radial webs (40, 41, 42) are formed on the rear wall (34),
- damping elements (50) are arranged in the interstices (46, 47, 48) formed by the radial webs (40, 41, 42), the rear wall (34), the gear rim (12) and the gear hub (32), and
- recesses (57) are shaped out of the damping elements, which serve for the engagement of drivers for the transmission of torque.

9. Gear according to one of Claims 1 to 4 or 8, **characterized in that** the gear (10) is made of a plastic, preferably by injection.

10. Gear according to one of the preceding claims, **characterized in that** the walls (16, 18) run parallel to one another.

11. Gear according to one of the preceding claims, **characterized in that** the walls (16, 18) are connected by webs parallel to the axis of rotation in the nature of transverse webs (20 ... 20n) and by a second web (22) in the plane of rotation, and that the transverse webs abut the second web (22) on both sides.

12. Gear according to one of the preceding claims, **characterized by** the use as worm gear in a worm gearing.

## Revendications

1. Roue dentée comprenant une couronne dentée (12) et un moyeu (32), la couronne dentée (12) étant formée d'au moins deux parois (16, 18) s'étendant transversalement au plan de rotation de la route dentée, ces parois étant reliées par des entretoises (20) s'étendant dans la direction axiale,
**caractérisée en ce que**
- la couronne dentée (2) est reliée au moyeu (32) par une paroi arrlère (34) s'étendant sur toute la périphérie et, formée sur la couronne dentée (12) et le moyeu (32) et
- chaque entretoise (20) fait un angle (24, 25) avec le rayon (28) de la roue dentée.

2. Roue dentée selon la revendication 1,
**caractérisée en ce que**
l'angle (24, 25) est alternativement positif et négatif dans la direction périphérique (30).

3. Roue dentée selon les revendications 1 ou 2,
**caractérisée en ce que**
les entretoises (20) sont disposées pour former une structure de liaison en nid d'abeille ou en demi-queue d'aronde entre les parois de la roue dentée.

4. Roue dentée comprenant une couronne dentée (12) et un moyeu (32), la couronne dentée (12) étant formée d'au moins deux parois (16, 18) s'étendant transversalement au plan de rotation de la roue dentée (10), ces parois étant reliées par des entretoises (20) s'étendant dans la direction axiale,
**caractérisée en ce que**
- la couronne dentée (12) est reliée au moyeu (32) par une cloison arrière (34) s'étendant sur toute la périphérie et formée sur la couronne dentée (12) et le moyeu (32), et
- plusieurs entretoises sont prévues faisant un angle par rapport à l'axe de rotation (14) de la roue dentée.

5. Roue dentée comprenant une couronne dentée (12) et un moyeu (32), la couronne dentée (12) étant formée d'au moins deux parois (16, 18) s'étendant transversalement au plan de rotation de la route dentée, ces parois étant reliées par des entretoises (20) s'étendant dans la direction axiale,
**caractérisée en ce que**
- la couronne dentée (12) est reliée au moyeu (32) par une paroi arrière (34) s'étendant sur toute la périphérie, cette paroi étant formée sur la couronne dentée (12) et le moyeu (32),
- la paroi arrière (34) comporte des entretoises radiales (40, 41, 42) formées sur cette paroi et
- la roue dentée est fabriquée en matière plastique notamment pour injection.

6. Roue dentée selon la revendication 5,
**caractérisée en ce que**
chaque entretoise radiale présente une cavité (43) vers la paroi de la couronne dentée et vers la paroi extérieure du moyeu.

7. Roue dentée selon la revendication 5 ou 6,
**caractérisée en ce que**
- des éléments d'amortissement (50) sont prévus dans les intervalles (46, 47, 48) formés par les entretoises radiales (40, 41, 42), la paroi arrière (34), la couronne dentèe (12) et le moyeu (32) et
- des cavités (57) sont prévues dans les éléments d'amortissement pour servir de prise à des organes d'entraînement pour la transmission du couple.

8. Roue dentée comprenant une couronne dentée (12) et un moyeu (32), la couronne dentée (12) étant formée d'au moins deux parois (16, 18) s'étendant transversalement au plan de rotation de la route dentée, ces parois étant reliées par des entretoises (20) s'étendant dans la direction axiale,
**caractérisée en ce que**
- la couronne dentée (12) est reliée au moyeu (32) par une paroi arrière (34) s'étendant sur toute la périphérie, et reliée à la couronne dentée (12) et au moyeu (32)
- la paroi arrière (34) comporte des entretoises radiales (40, 41, 42), des éléments d'amortissement (50) sont prévus dans les cavités (46, 47, 48) formées par les entretoises radiales (40, 41, 42), la paroi arrière (34), la couronne dentée (12) et le moyeu (32), et
- des cavités (57) sont formées dans les éléments d'amortissement pour la prise d'organes d'entraînement pour la transmission du couple.

9. Roue dentée selon l'une des revendications 1 à 4 ou 8,
**caractérisée en ce que**
la roue dentée (10) est fabriquée en matière plastiqué, dé préférence par injection.

10. Roue dentée selon l'une des revendications précédentes,
**caractérisées en ce que**
les parois (16, 18) sont parallèles.

11. Roue dentée selon l'une des revendications précédentes,
**caractérisée en ce que** les parois (16, 18) sont reliées par des entretoises parallèles à l'axe de rotation dans le sens des entretoises transversales (20..20n) et sont reliées par une seconde entretoise (22) dans le plan de rotation et
les entretoises transversales butent des deux côtés contre la seconde entretoise (22).

12. Roue dentée selon l'une des revendications précédentes,
**caractérisée en ce que**
elle est appliquée comme roue à vis dans une transmission à roue à vis.
